# EUROPÄISCHE PATENTSCHRIFT

(11) **EP 2 465 177 B1**
(45) Veröffentlichungstag und Bekanntmachung des Hinweises auf die Patenterteilung: **29.04.2015**
(21) Anmeldenummer: 10729843.2
(22) Anmeldetag: 29.06.2010
(51) Int. Cl.: H02J 3/32, B60L 11/18

(54) **STEUERUNG VON LADESTATIONEN**
CONTROLLING CHARGING STATIONS
COMMANDE DE STATIONS DE CHARGE

(30) Priorität: 10.08.2009 DE 102009036816
(43) Veröffentlichungstag der Anmeldung: 20.06.2012
(73) Patentinhaber: RWE AG, 45128 Essen (DE)
(72) Erfinder: DIEFENBACH, Ingo, 59425 Unna (DE); GAUL, Armin, 59379 Selm (DE)
(74) Vertreter: Cohausz & Florack
(86) Internationale Anmeldenummer: PCT/EP2010/059200
(87) Internationale Veröffentlichungsnummer: WO 2011/018270

(56) Entgegenhaltungen:
- EP-A1- 2 048 761
- WO-A2-2007/065135
- US-A1- 2002 132 144
- US-A1- 2005 034 023
- US-A1- 2009 043 520
- US-A1- 2009 189 456

## Beschreibung

Der Gegenstand betrifft ein Verfahren zur Steuerung von Ladestationen sowie eine Ladestation und eine Niederspannungstransformator.

Die Verbreitung elektrisch betriebener Fahrzeuge wird in naher Zukunft rapide zunehmen. Mit der Verbreitung von Elektrofahrzeugen, die mit einem Elektromotor betrieben werden, muss jedoch sichergestellt werden, dass diese in einfachster Weise mit Energie versorgt werden können. Hierzu muss eine funktionierende Infrastruktur zur Verfügung gestellt werden.

Insbesondere muss die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es notwendig, dass auch außerhalb des häuslichen Umfeldes ein Laden der Fahrzeuge möglich ist. Hierfür müssen in öffentlichen und semi-öffentlichen Bereichen, bspw. Parkhäusern oder Firmenparkplätze, Ladestationen zur Verfügung gestellt werden, um eine stete Verfügbarkeit von Energie für Elektrofahrzeuge durch ein Versorgungsnetz zur Verfügung zu stellen. Diese Verfügbarkeit ist ein entscheidendes Kriterium für die Akzeptanz von Elektrofahrzeugen.

Von entscheidender Bedeutung für die Akzeptanz von Elektrofahrzeugen ist es jedoch auch, dass das Versorgungsnetz zu jeder Zeit Ladeenergie zur Verfügung stellt. Das bedeutet aber auch, dass die Netzkapazität der steigenden Energienachfrage durch Elektrofahrzeuge gewachsen sein muss. Die hierfür notwendigen Ladestationen sind regelmäßig einer gemeinsamen Transformatorstation (Trafostation) im Niederspannungsbereich zugeordnet. Typischerweise haben Trafostationen im Niederspannungsbereich Stationsleistung zwischen 400 und 1000kVA. Diese Stationsleistung muss für die Versorgung der ohnehin vorhandenen Verbraucher, wie beispielsweise Haushalte sowie zusätzlich für die in dem Versorgungsbereich der Trafostation angeordneten Ladestationen ausreichen.

Bisher bekannte und für den Betrieb geeignete Ladestationen verfügen jedoch regelmäßig über zwei oder mehr Abgriffe an denen jeweils hohe Leistungen, z.B. 44kVA Leistung, zur Verfügung gestellt werden kann. Unter dieser Prämisse kann bereits die maximale Stationsleistung beim gleichzeitigen Betrieb von 5 bis 10 Ladestationen innerhalb eines Versorgungsbereichs einer Trafostation ausgeschöpft sein. Dies könnte jedoch zu Versorgungsengpässen führen. Insbesondere muss die stete Versorgung der Haushalte mit elektrischer Energie sichergestellt sein. Diese Versorgung darf durch das Laden von Elektrofahrzeugen an Ladestationen nicht beeinträchtigt werden.

Aus diesem Grunde lag dem Gegenstand die Aufgabe zugrunde, ein Verfahren und eine Vorrichtung zur Verfügung zu stellen, welche eine Steuerung von Ladestationen ermöglichten, die eine Belastung des Versorgungsnetzes vermindert.

Diese Aufgabe wird gegenständlich durch ein Verfahren nach Anspruch 1 gelöst. Dieses Verfahren beinhaltet ein vorzugsweise automatisches Gruppieren von zumindest zwei Ladestationen zu einer Gruppe.

Wie bereits zuvor ausgeführt wurde, können mehrere Ladestationen einer gemeinsamen Transformatorstation zugeordnet sein. Eine einer Transformatorstation zugeordnete Mehrzahl von Ladestationen kann dabei eine Gruppe bilden. Auch andere Gruppierungen sind möglich, beispielsweise örtlich einander benachbarte Ladestationen oder Ladestationen, die einem bestimmten Energieversorger oder Dienstleister zugeordnet sind. So ist es durchaus im Bereich des möglichen, dass innerhalb einer Trafostation verschiedene Gruppen von Ladestationen gebildet werden. Das Gruppieren kann statisch oder dynamisch sein. Beim statischen Gruppieren kann beim Anschluss einer Ladestation diese entweder manuell oder automatisch einer Gruppe von Ladestationen zugeordnet werden. Diese Zuordnung kann mittels einer Ladestationserkennung erfolgen. Beim dynamischen Gruppieren kann während des Betriebes einer Ladestation diese automatisch jeweils einer von verschiedenen Gruppen zugeordnet werden.

Darüber hinaus umfasst das Verfahren das Austauschen zumindest von Ist-Ladeparametern der Ladestationen innerhalb der Gruppe. Ist-Ladeparameter können beispielsweise Informationen zu der aktuell zur Verfügung gestellten elektrischen Leistung an einer Ladestation sein. Beispielsweise kann ein Fahrzeug aktuell 10kVA Leistung beziehen. Diese Information kann ein Ist-Ladeparameter sein. Andere Ist-Ladeparameter werden nachfolgend noch erläutert. Die Ist-Ladeparameter werden gegenständlich innerhalb der Gruppe ausgetauscht. Somit ist es möglich, dass in der Gruppe die Ist-Ladeparameter jeder der Ladestationen bekannt sind. Ein Ist-Ladeparameter kann auch eine Information sein, dass keine aktuelle Ladung durchgeführt wird und eine Ladestation 0kVA Leistung bezieht.

Aus zumindest den Ist-Ladeparametern wird gegenständlich für die Gruppe zumindest eine Lastprognose erstellt. Eine Lastprognose kann beispielsweise Informationen darüber enthalten, wie sich die elektrische Last innerhalb der Gruppe, d.h. die von den Ladestationen abgerufene Energie, in Zukunft verändert. So kann beispielsweise anhand der Ist-Ladeparameter prognostiziert werden, welche Energie in einer halben Stunde, einer Stunde oder in zwei Stunden zur Verfügung gestellt werden muss als auch, welche Kapazität in der Gruppe noch zur Verfügung steht. Bei den Ist-Ladeparametern kann beispielsweise auch eine Information über die aktuell zur Verfügung gestellte Leistung in Kombination mit der von einem Fahrzeug noch benötigten Energie enthalten. Aus diesen Informationen kann beispielsweise ermittelt werden, wie lange ein Ladevorgang noch andauern wird. Mit diesen Informationen kann in einer Lastprognose festgestellt werden, dass eine bestimmte Ladestation zu einer bestimmten Zeit keine weitere elektrische Energie abruft, da dann der aktuell laufende Ladevorgang abgeschlossen sein wird.

Mit Hilfe der erstellten Lastprognose ist es möglich, für die Ladestationen der Gruppe Soll-Ladeparameter zu bestimmen. Diese können aus der Lastprognose errechnet werden. Mit Hilfe der Soll-Ladeparameter ist es möglich, die zur Verfügung stehende Stationsleistung intelligent auf die in der Gruppe befindlichen Ladestationen aufzuteilen. Das intelligente Aufteilen kann darin bestehen, dass die abrufbare Leistung einer jeden Ladestation auf einen bestimmten Höchstwert reduziert wird. Auch kann in den Soll-Ladeparametern bestimmt werden, dass in einem ersten Zeitraum eine erste Leistung an einer Ladestation abgerufen werden darf und in einem zweiten Zeitraum eine zweite, von der ersten Leistung unterschiedliche Leistung abgerufen werden darf.

Beispielsweise sei folgendes Beispiel genannt. Ein Elektrofahrzeug benötigt typischerweise 15kWh elektrische Energie für eine Reichweite von 100km. Diese 15kWh müssen von den Kunden täglich nachgeladen werden, wenn sie eine Fahrleistung ca. 100km am Tag haben. Unter der Annahme, dass in einem Bereich einer Trafostation 120 Fahrzeuge mit 15kWh geladen werden müssen, ergibt sich ein Gesamtenergiebedarf von 1.800kWh/Tag.

Typischerweise befinden sich die Fahrzeuge 18 Stunden an einem Ort und werden nur 4 Stunden am Tag bewegt. Somit kann die benötigte Leistung von 15kWh über 18 Stunden am Tag nachgeladen werden. Ohne eine Lastprognose und das Bestimmen von Soll-Ladeparametern kann es vorkommen, dass nahezu alle Fahrzeuge zur selben Zeit elektrische Energie zum Laden abrufen. Insbesondere nach Feierabend, wenn die Kunden nach Hause kommen und ihre Fahrzeuge an die Ladestationen anschließen, entsteht ein abrupter Bedarf an elektrischer Leistung. Würde die maximale Leistung unmittelbar zur Verfügung gestellt, so müsste der Tagesenergiebedarf von 1.800kWh in ca. 1 Stunde zur Verfügung gestellt werden. Dies bedeutete einen Leistungsbedarf von 1.800kVA, welche höher wäre, als die Stationsleistung der Trafostation. Somit wäre ein Ausbau der Trafostationen notwendig, nur um die Elektrofahrzeuge laden zu können.

Bei einem intelligenten, gegenständlichen Ladeverfahren wird jedoch anhand der Lastprognose und mit Hilfe der Soll-Ladeparametern bestimmt, dass die Fahrzeuge nicht unmittelbar mit der gesamten zur Verfügung stehenden Leistung geladen werden, sondern über ihre gesamte Standzeit die benötigte Energie erhalten. So ist bei der Annahme eines Tagesenergiebedarfs von 1.800kWh und einer Standzeit von 18 Stunden ein momentaner Leistungsbedarf von lediglich 100kVA (1.800kWh/18h) vorhanden. Somit wäre es möglich, eine Vielzahl von Elektrofahrzeugen mit nur einer Trafostation aufzuladen, ohne dass die Trafostation an ihre Leistungsgrenze stößt.

Mit Hilfe des gegenständlichen Verfahrens ist es somit möglich, den Bedarf eines Netzausbau zu reduzieren und gleichzeitig den Elektrofahrzeugen die benötigte Energie sicher zur Verfügung zu stellen.

Ein weiterer Gegenstand ist eine Ladestation für Elektrofahrzeuge umfassend Zuordnungsmittel zum Gruppieren der Ladestation zu einer Gruppe mit zumindest zwei Ladestationen und Kommunikationsmittel zum Austauschen zumindest von Ist-Ladeparametern innerhalb der Gruppe und zum Empfangen von Soll-Ladeparametern zum Bestimmen von Ladeparametern für das Laden von Elektrofahrzeugen.

Ein weiterer Gegenstand ist eine Ladestation für Elektrofahrzeuge umfassend Zuordnungsmittel zum Gruppieren der Ladestation zu einer Gruppe mit zumindest zwei Ladestationen, Kommunikationsmittel zum Empfangen zumindest von Ist-Ladeparametern von Ladestationen der Gruppe, Rechenmittel zum Erstellen einer Lastprognose für die Gruppe abhängig von zumindest den empfangenen Ist-Ladeparametern und zum Bestimmten von Soll-Ladeparametern für die Ladestationen der Gruppe abhängig von der Lastprognose, wobei die Kommunikationsmittel zum Aussenden der Soll-Parameter an Ladestationen der Gruppe gebildet sind.

Ein weiterer Gegenstand ist eine Niederspannungstransformationsstation umfassend Zuordnungsmittel zum Gruppieren von Ladestationen zu einer Gruppe mit zumindest zwei Ladestationen, Kommunikationsmittel zum Empfangen zumindest von Ist-Ladeparametern von Ladestationen der Gruppe, Rechenmittel zum Erstellen einer Lastprognose für die Gruppe abhängig von zumindest den empfangenen Ist-Ladeparametern, und zum Bestimmen von Soll-Ladeparametern für die Ladestationen der Gruppe abhängig von der Lastprognose.

Ein weiterer Gegenstand ist ein System umfassend eine zuvor beschriebene Ladestation und/oder eine zuvor beschriebene Niederspannungstransformatorstation.

Gemäß einem vorteilhaften Ausführungsbeispiel wird vorgeschlagen, dass das Erstellen der Lastprognose zusätzlich abhängig zumindest von einer Tagesganglinie zumindest einer Ladestation in der Gruppe und/oder einer Wochenganglinie zumindest einer Ladestation in der Gruppe ist. Abhängig von Vergangenheitsdaten ist es möglich, den Energiebedarf im Bereich einer Transformationsstation abzuschätzen. So ist es möglich, zu Prognostizieren, zu welchem Zeitpunkt welche Leistung mit welcher Wahrscheinlichkeit zur Verfügung gestellt werden muss. Auf historischen Daten basierende Kenntnisse können in einer Tages-, einer Wochen-, einer Monats-, oder einer Jahresganglinie zusammengefasst werden. Somit ist es mit Hilfe einer Tagesganglinie möglich, den wahrscheinlichsten Leistungsbedarfsverlauf innerhalb eines Tages zu bestimmen. Eine Wochenganglinie ermöglicht dies im Verlauf einer Woche. Mit Hilfe der Informationen, welche aus einer Ganglinie ermittelt werden können, kann beispielsweise zusammen mit den Ist-Ladeparametern festgestellt werden, welche elektrische Leistung in einer Stunde, in zwei Stunden oder in mehreren Stunden zur Verfügung gestellt werden muss. Wird erkannt, dass die benötigte Leistung der maximalen Transformatorstationsleistung nahe kommt oder diese überschreitet, so kann mit Hilfe der Soll-Ladeparameter ein solches Überschreiten verhindert werden, in dem in den Soll-Ladeparametern festgelegt wird, dass an einer Ladestation zu einem bestimmten Zeitpunkt nur eine bestimmte maximale Leistung abgerufen werden darf. So kann beispielsweise festgelegt werden, dass zu einem bestimmten Zeitpunkt maximal 4kVA, 5kVA, 10kVA oder 15kVA oder andere Leistungen von der Ladestationen durch ein Elektrofahrzeug abgerufen werden darf.

Innerhalb eines Fahrzeugs kann ein Laderegler Kenntnis über den Ladezustand einer Batterie haben. Darüber hinaus kann der Laderegler Kenntnisse über die momentan zur Verfügung gestellte elektrische Leistung haben. Mit diesen Informationen und beispielsweise einer weiteren Information über die Batterietemperatur kann ein Laderegler eine Ladeprognose für ein Elektrofahzeug erstellen. Beispielsweise kann in einem Laderegler prognostiziert werden, wie lange ein Ladevorgang noch andauern wird, bis eine Batterie einen vordefinierten Ladezustand erreicht hat. Auch kann im Laderegler bestimmt werden, wie eine Stromganglinie für das Laden des Elektrofahrzeugs über die verbleibende Ladedauer aussieht. Somit kann der Laderegler beispielsweise feststellen, dass die benötigte Stromstärke zum Ende des Ladevorgangs geringer wird und sich somit eine fallende Stromganglinie ergibt. Aus diesem Grunde wird gemäß einem vorteilhaften Ausführungsbeispiel vorgeschlagen, dass das Erstellen der Lastprognose zusätzlich abhängig von zumindest einer Ladeprognose eines Elektrofahrzeugs ist, wobei die Ladeprognose eines Elektrofahrzeugs zumindest eine Ladedauer und/oder eine Stromganglinie umfasst. Diese Ladeprognose kann vorteilhafterweise von dem Laderegler bzw. dem Elektrofahrzeug an die Ladestation übermittelt werden. Die Ladestation kann diese Information in der Gruppe kommunizieren, wodurch es möglich ist, dass mit Hilfe der Ladeprognose eine verbesserte Lastprognose erstellt werden kann.

Gemäß einem vorteilhaften Ausführungsbeispiel wird vorgeschlagen, dass die Ist-Ladeparameter von zumindest einer Ladestation zumindest Informationen zu der aktuellen Ladestromstärke und/oder einem Laderegler eines an die Ladestation angeschlossenen Elektrofahrzeugs enthalten. Mit Hilfe der Informationen über die aktuelle Ladestromstärke ist es möglich, die von dem Elektrofahrzeug momentan abgerufene Ladeleistung zu bestimmen. Bestehen Kenntnisse über den verwendeten Laderegler, so kann beispielsweise darauf geschlossen werden, dass die Ladestromstärke sich über die Zeit verändert, wenn der Laderegler eine dynamische Ladestromlinie realisiert. Auch erlaubt beispielsweise eine Information über den Laderegler einen Rückschluss darauf, ob der Laderegler eine Veränderung der Ladeparameter über den Ladezeitraum ermöglicht. In diesem Fall kann mit dieser Information beim Bestimmen der Lastprognose oder beim Bestimmen der Soll-Parameter die Möglichkeit geschaffen werden, den Ist-Parameter des zugehörigen Elektrofahrzeugs über den Ladezeitraum zu verändern, so dass ein Elektrofahrzeug während des Ladens unterschiedliche Ladeparameter zur Verfügung gestellt bekommt. Beispielsweise kann zu einem Zeitpunkt, zu dem eine geringe Last in der Gruppe besteht, ein Elektrofahrzeug mit einer hohen Stromstärke und einer hohen Ladeleistung geladen werden sowie bei einer hohen Last in der Gruppe mit einer geringen Stromstärke. Erlaubt der Laderegler eine Veränderung dieser Parameter und ergibt sich anhand der Lastprognose die Notwendigkeit, diese Parameter zu verändern, so kann dies geschehen, sollten die Soll-Ladeparameter dies erfordern.

Gemäß einem vorteilhaften Ausführungsbeispiel wird vorgeschlagen, dass die Ist-Parameter in Abständen ausgetauscht werden und dass die Lastprognose und/oder die Soll-Parameter adaptiv abhängig von den aktuellen Ist-Parametern verändert werden. Somit ist es möglich, in Abständen bevorzugt regelmäßig die Lastprognose und die Soll-Parameter zu verändern und an die aktuellen Gegebenheiten innerhalb der Gruppe anzupassen. Verhält sich beispielsweise ein Fahrzeug nicht konform zu den Soll-Parametern, beispielsweise wenn es eine zu hohe Stromstärke bezieht, kann dies in den Ist-Parametern festgestellt werden und die Soll-Parameter können angepasst werden.

Gemäß einem vorteilhaften Ausführungsbeispiel wird auch vorgeschlagen, dass die Soll-Ladeparameter innerhalb der Gruppe kommuniziert werden und dass abhängig von den Soll-Ladeparametern eine Ladestation Ladeparameter mit einem Elektrofahrzeug aushandelt. Ergibt sich in der Lastprognose, dass eine erhöhte Last in naher Zukunft wahrscheinlich ist, so kann der Soll-Ladeparameter diesem Rechnung tragen, und beispielsweise bestimmen, dass eine maximale Ladestromstärke von 16A erlaubt ist. Ist ein solcher Soll-Ladeparameter innerhalb der Gruppe kommuniziert worden und verbindet sich ein Elektrofahrzeug mit einer Ladestation, so kann in den Ladeparametern, welche die Ladestation mit dem Elektrofahrzeug aushandelt, festgelegt werden, dass das Elektrofahrzeug lediglich mit 16A laden darf. Das Elektrofahrzeug bzw. der in dem Elektrofahrzeug angeordnete Rechner kann diesen Ladeparameter akzeptieren und eine Ladung beginnen oder ablehnen. Wird dieser Ladeparameter abgelehnt, so wird die Ladung erst gar nicht gestartet. Mit Hilfe der Soll-Ladeparameter kann somit eine Überlast in der Gruppe vermieden werden.

Gemäß einem vorteilhaften Ausführungsbeispiel wird auch vorgeschlagen, dass die Soll-Ladeparameter zumindest Informationen zu einer maximalen Stromstärke, einer Ladezeit, einer Ladedauer, einer Stromganglinie und/oder einer Energiemenge enthalten. Wie zuvor erläutert, kann in den Soll-Ladeparametern beispielsweise eine maximale Stromstärke, beispielsweise 16A, 20A, 30A oder dergleichen festgelegt werden. Mit Hilfe der Soll-Ladeparameter kann jedoch auch eine Ladezeit bestimmt werden. So ist es beispielsweise möglich, zu bestimmen, dass eine Ladung nur in einem bestimmten Zeitfenster stattfinden darf und nicht unmittelbar begonnen werden darf. So kann beispielsweise eine Nachtstunde zum Laden bestimmt werden. Auch eine Ladedauer kann bestimmt werden. So ist es beispielsweise möglich, dass wenn in zwei Stunden eine hohe Last erwartet wird, momentan jedoch eine geringe Last vorhanden ist, und das Fahrzeug lediglich eine geringe Energiemenge benötigt, dass eine Ladedauer von einer Stunde festgelegt wird und in dieser Stunde mit einer maximalen Stromstärke geladen wird. Auch kann eine Stromganglinie festgelegt werden, die beispielsweise festlegt, dass zu Beginn eines Ladevorgangs, beispielsweise wenn in der Gruppe eine hohe Last vorliegt, nur mit einer geringen Stromstärke geladen werden darf und dass zum Ende eines Ladevorgangs, wenn prognostiziert wurde, das eine geringe Last in der Gruppe vorliegt, die Stromstärke erhöht wird. Schließlich kann auch die zu beziehende Energiemenge festgelegt werden.

Während einer Ladephase können sich Soll-Ladeparameter verändern. Bei geeigneten Laderegeln, die eine Veränderung von Ladeparametern ermöglichen, wird gemäß einem vorteilhaften Ausführungsbeispiel vorgeschlagen, dass bei sich verändernden Soll-Ladeparametern die Ladeparameter während einer Ladephase mit dem Elektrofahrzeug neu ausgehandelt werden. So kann beispielsweise bei einer unerwartet hohen Last mit einem Elektrofahrzeug aushandelt werden, dass dieses nur noch mit einer geringen Stromstärke lädt. Dies kann während einer bereits laufenden Ladephase geschehen.

Gemäß einem vorteilhaften Ausführungsbeispiel wird vorgeschlagen, dass zu Beginn eines Ladevorgangs von einem Elektrofahrzeug an eine Ladestation Informationen zu einer benötigten Energiemenge, einer bevorzugten Ladedauer, einer bevorzugten Ladezeit und/oder einem Laderegler übermittelt werden. Gegebenenfalls beherrschen diese Funktion nur neuere Fahrzeuge. In diesem Fall kann von der Ladestation eine Annahme zu der Ladedauer und der Ladezeit als auch der Stromganglinie machen. Auch kann von der Ladestation abhängig von den Soll-Ladeparametern und den Informationen von den Elektrofahrzeug zumindest eine maximale Ladestromstärke, ein Ladezeitraum, eine Ladedauer und/oder eine maximale Ladedauer bestimmt und an das Elektrofahrzeug kommuniziert werden. Dies kann abhängig von den Fähigkeiten des Ladereglers erfolgen. Dieses Aushandeln von Ladeparametern ermöglicht es, abhängig von den Fähigkeiten und Bedürfnissen des Elektrofahrzeugs und den Beschränkungen der Soll-Ladeparametern die optimalen Ladeparameter mit dem Elektrofahrzeug auszuhandeln. Hierbei kann zum Einen den Bedürfnissen des Elektrofahrzeugs nach einer bestimmten Energiemenge nachgekommen werden. Zum Anderen kann beispielsweise vertraglich einem Kunden eine minimale Ladestromstärke von 20A zugesichert worden sein. Ist dies der Fall, so muss dies bei dem Aushandeln der Ladeparameter unter Berücksichtigung der Soll-Ladeparametern berücksichtigt werden.

Gemäß einem vorteilhaften Ausführungsbeispiel wird vorgeschlagen, dass die Gruppe zumindest einem Transformator einer Niederspannungsebene zugeordnet ist. Beispielsweise kann ein solcher Transformator eine Leistung von 400 bis 1.000kVA zur Verfügung stellen. Diese Stationsleistung muss intelligent auf die an diesen Transformator angeschlossenen Ladestationen verteilt werden, was durch Erstellen einer Lastprognose und Bestimmen von Soll-Ladeparametern erfolgt. Somit kann in der Niederspannungsebene ein Überlastszenario vermieden werden.

Aus diesem Grunde wird auch vorgeschlagen, dass die Soll-Ladeparameter abhängig von der verfügbaren elektrischen Leistung der Niederspannungsebene und/oder der Mittelspannungsebene bestimmt werden. Beim Erstellen der Lastprognose und dem Bestimmen der Soll-Ladeparameter kann die verfügbare elektrische Leistung in der Niederspannungsebene berücksichtigt werden. Darüber hinaus ist es jedoch auch möglich, dass die verfügbare Leistung der Mittelspannungsebene berücksichtigt werden kann. Somit kann in einer hierarchischen Struktur eine Überlast sowohl in der Niederspannungsebene als auch der Mittelspannungsebene durch Bestimmen der Soll-Ladeparameter vermieden werden.

Um die Ladestationen einer Gruppe zuordnen zu können, wird vorgeschlagen, dass die Gruppe zumindest eine Gruppen-ID aufweist. Mit Hilfe dieser Gruppen-ID ist es möglich, die Gruppe zu identifizieren und eine Kommunikation zwischen Gruppenmitgliedern zu ermöglichen. Diese Kommunikation kann beispielsweise über ein Kommunikationsmedium, beispielsweise PLC, Nahfunk oder ein sonstiges Netzwerkmedium erfolgen. Auch kann eine Kommunikation über Mobilfunk, beispielsweise zwischen den Fahrzeugen bzw. den Ladereglern untereinander und der Ladestation oder den Ladestationen untereinander oder zwischen Fahrzeugen, Ladestationen und Trafostationen erfolgen. Z.B. kann die Kommunikation über GSM, UMTS, GPRS, LTE oder ein sonstiges Mobilfunkprotokoll erfolgen. Die Kommunikationssprache kann beispielsweise SML sein. Andere Kommunikationssprachen, wie DLMS, XML, HTML oder dergleichen sind ebenfalls möglich. Mit Hilfe der Gruppen-ID lassen sich die Stationen innerhalb der Gruppe eindeutig zu dieser Gruppe gehörend adressieren.

Gemäß einem vorteilhaften Ausführungsbeispiel wird vorgeschlagen, dass die Gruppen-ID von einer Niederspannungstrafostation an die angeschlossenen Ladestationen übermittelt wird und/oder dass eine Gruppen-ID zwischen an eine selbe Niederspannungstrafostation angeschlossenen Ladestation ausgetauscht wird. Einerseits kann die Niederspannungstrafostation als sogenannter "Master" agieren und die Kommunikation mit den Stationen gewährleisten. In diesem Fall muss die Trafostation mit den geeigneten Kommunikations- und Rechenmitteln ausgestattet sein. Außerdem kann in einer solchen Station die Bestimmung der Lastprognose und der Soll-Ladeparameter erfolgen. Andererseits ist es jedoch auch möglich, dass innerhalb einer Gruppe von Ladestationen eine einzige Ladestation als "Master" agiert und die Überwachungs- und Prognosefunktion übernimmt und alle anderen Stationen in der Gruppe von dieser "Master" Station Informationen erhalten.

Auch wäre es möglich, dass jede Ladestation innerhalb einer Gruppe mit allen anderen Ladestationen innerhalb der Gruppe kommuniziert und jede Ladestation für sich selber eine Lastprognose und Soll-Parameter ermittelt. Diese Informationen können innerhalb der Gruppe zirkuliert werden, wobei die Gruppen-ID verwendet wird, um die Kommunikation den Ladestationen zuordnen zu können.

Daher wird gemäß einem vorteilhaften Ausführungsbeispiel vorgeschlagen, dass innerhalb der Gruppe in der Niederspannungstrafostation oder in einer Ladestation die Lastprognose und die Soll-Ladeparameter bestimmt werden.

Gemäß einem vorteilhaften Ausführungsbeispiel wird auch vorgeschlagen, dass das Austauschen der Ist-Ladeparameter zumindest das Senden der Ist-Ladeparameter an die Transformatorstation der Niederspannungsebene oder an eine Ladestation der Gruppe umfasst. Somit können die Ist-Ladeparameter entweder an die Niederspannungstrafostation oder an zumindest eine Ladestation in der Gruppe übermittelt werden.

Die zuvor genannten Verfahren können auch als Computerprogramm oder als auf einem Speichermedium gespeichertes Computerprogramm realisiert werden. Hierbei kann fahrzeugseitig, ladestationsseitig und/oder transformatorstationsseitig ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1: einen hierarchischen Aufbaue eines Energieversorgungsnetzes mit Mittelspannungsebene, Niederspannungsebene, Verbrauchern und Ladestationen;
- Fig. 2: schematisch einen Aufbau einer Ladestation gemäß einem Ausführungsbeispiel;
- Fig. 3: schematisch einen Ablauf eines Verfahrens gemäß einem Ausführungsbeispiel.

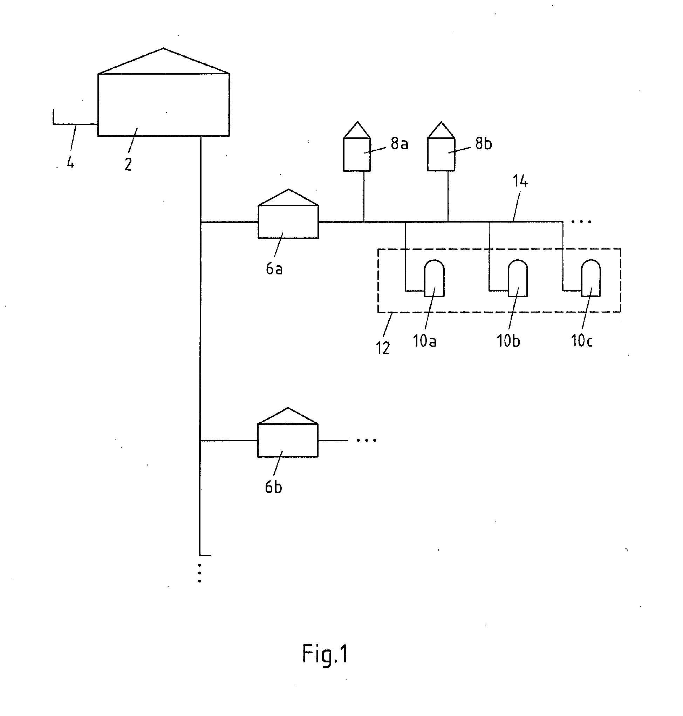

Fig. 1 zeigt eine Mittelspannungstransformatorstation 2 die an eine Hochspannungsebene 4 eines Energieversorgungsnetzes angeschlossen ist. Die Mittelspannungstransformatorstation 2 versorgt Niederspannungstransformationsstationen 6a, 6b mit elektrischer Energie. Am Ausgang der Niederspannungstransformationsstationen 6 liegt eine Spannung von 230V/400V an, welche den Verbrauchern zur Verfügung gestellt wird. Die Leistung einer Niederspannungstransformationsstation 6 beträgt in der Regel zwischen 400 und 1.000kVA. Diese Leistung muss ausreichen, um alle Verbraucher, die an den Niederspannungstrafo angeschlossen sind, mit Energie zu versorgen. Zu den Verbrauchern gehören herkömmliche Hausverbraucher 8 und Ladestationen 10.

Im Bereich einer Niederspannungstransformationsstation 6 können zukünftig, um eine ausreichende Versorgung von Elektrofahrzeugen mit Ladepunkten zur Verfügung zu stellen, 100 oder mehr Ladestationen 10 angeschlossen sein. Greifen alle Ladestationen 10 zur selben Zeit elektrische Leistung von der Niederspannungstransformationsstation 6 ab, so kann es schnell dazu kommen, dass die Niederspannungstransformationsstation 6 ihre Maximalleistung erreicht. Jedoch ist erkannt worden, dass Elektrofahrzeuge die meiste Zeit des Tages stehen und an eine Ladestation angeschlossen sind. Wird nun der Energiebedarf der Elektrofahrzeuge im Verlauf der gesamten Standzeit gedeckt, so kann durch eine intelligente Steuerung die maximale Leistung, die die Niederspannungstransformationsstation 6 zur Verfügung stellen muss, reduziert werden. Somit ist durch eine intelligente Aufteilung der Leistung auf die gesamte Standdauer der Elektrofahrzeuge eine Reduzierung der Momentanleistung von über 1.000kVA auf ca. 100kVA möglich.

Dies ist dadurch möglich, dass die Ladestationen 10 zu Gruppen 12 zusammengefasst werden, wobei eine Gruppe 12 einer Niederspannungstransformationsstation 6 zugeordnet sein kann. Innerhalb der Gruppe 12 wird durch Auswerten von Ist-Ladeparametern und durch Erkenntnisse über die zur Verfügung zu stellenden Leistung aus der Vergangenheit sowie durch aktuelle Ladeprognosen innerhalb der Fahrzeuge eine Lastprognose erstellt, mit deren Hilfe Soll-Ladeparameter bestimmt werden, welche das Ladeverhalten der Fahrzeuge über die gesamte Standzeit regeln. Durch diese Regelung der Ladeparameter über die gesamte Standzeit der Elektrofahrzeuge ist es möglich, von der Niederspannungstransformationsstation 6 nur eine relativ geringe Momentanleistung abzurufen, dies jedoch über einen längeren Zeitraum, so dass der Gesamtenergiebedarf zum Laden aller in der Gruppe 12 vorhandenen Elektrofahrzeuge gedeckt wird. Darüber hinaus kann mittels der Lastprognose und der Soll-Ladeparameter auch eine Überlastung der Mittelspannungstrafostation 2 vermieden werden, in dem auch eine Lastprognose für die Mittelspannungsebene erstellt wird und bei dem Bestimmen der Soll-Ladeparameter berücksichtigt wird.

Für die Kommunikation innerhalb der Gruppe und den Austausch von Ist-Ladeparametern und Soll-Ladeparametern muss eine Ladestation 10 entsprechend ausgestattet sein.

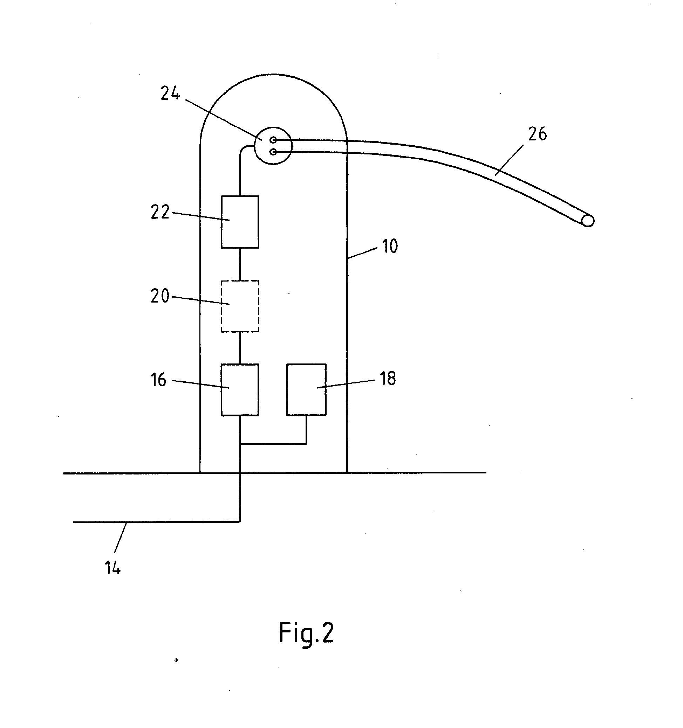

Fig. 2 zeigt eine Ladestation 10 in einer schematischen Schnittansicht. Die Ladestation 10 ist über ein Kabel 14 mit der Niederspannungstransformationsstation 6 verbunden. Darüber hinaus ist die Ladestation 10 über das Kabel 14 mit allen anderen Ladestationen 10 der Gruppe 12 verbunden. Über das Kabel 14 kann eine Kommunikation zwischen den Ladestationen 10 innerhalb der Gruppe 12 als auch zwischen den Ladestationen 10 und der Niederspannungstransformationsstation 6 erfolgen. Die Kommunikation kann dabei beispielsweise über Powerline-Communication erfolgen. Das Kommunikationsprotokoll kann beispielsweise SML, DLMS, XML, HTML oder ein sonstiger Standard sein. Auch kann die Kommunikation kabellos, z.B. mittels WLAN oder Mobilfunk, erfolgen.

In der Ladestation 10 ist eine Kommunikationseinheit 16, eine Gruppierungseinheit 18, optional eine Recheneinheit 20 und eine Ladesteuerschaltung 22 angeordnet. Über einen elektrischen Anschluss 24 und ein Ladekabel 26 kann ein Elektrofahrzeug (nicht dargestellt) mit der Ladestation 10 verbunden werden.

Die Ladesteuerschaltung 22 ermöglicht eine Kommunikation über das Ladekabel 26 mit dem Elektrofahrzeug und das Aushandeln von Ladeparametern. Das Aushandeln von Ladeparametern kann zumindest das Aushandeln einer maximalen Ladestromstärke beinhalten. Darüber hinaus können weitere Ladeparameter, wie eine Ladedauer, eine Stromganglinie, eine minimal zulässige Ladestromstärke, eine maximal zulässige Ladestromstärke, ein Ladezeitraum, eine Information über einen Energiemix, Vertragsdetails und dergleichen beinhalten. Die Ladeparameter können mittels der Ladesteuerschaltung 22 an das Elektrofahrzeug übermittelt werden und mit dem Elektrofahrzeug ausgehandelt werden. Außerdem ist es in der Ladesteuerschaltung 22 möglich, die Ist-Ladeparameter festzustellen, insbesondere die aktuelle Ladestromstärke.

Darüber hinaus kann in der Ladesteuerschaltung 22 oder in dem Elektrofahrzeug eine Ladeprognose erstellt werden, welche die Ladedauer und die benötigte Ladestromstärke prognostizieren kann, um das angeschlossene Elektrofahrzeug vollständig oder bis zur benötigten Menge aufzuladen. Die Ist-Ladeparameter als auch die Ladeprognose können von der Ladesteuerschaltung 22 an die Kommunikationseinheit 16 übermittelt werden.

Die Kommunikationseinheit 16 ermöglicht eine Kommunikation über das Kabel 14 oder ein sonstiges drahtgebundenes oder drahtloses Netzwerk zum Einen mit anderen Ladestationen 10 und zum Anderen mit der Niederspannungstransformationsstation 6. Über die Kommunikationseinheit 16 können die Ist-Ladeparameter ausgesendet werden und es können Soll-Ladeparameter empfangen werden.

Die Gruppierungseinheit 18 ermöglicht es, die Ladestation 10 einer Gruppe 12 zuzuordnen. Hierzu kann die Gruppierungseinheit 18 eine Gruppen-ID empfangen und/oder aussenden, um somit seine Zugehörigkeit zu einer bestimmten Gruppe 12 zu kommunizieren.

Schließlich kann eine optionale Recheneinheit 20 in der Ladestation 10 vorgesehen sein. In der optionalen Recheneinheit 20 können beispielsweise eine Lastprognose als auch Soll-Ladeparameter errechnet werden. Die Recheneinheit 20 kann zum Einen optional in einer "Master" Ladestation 10 angeordnet sein, wobei in einer Gruppe 12 eine "Master" Ladestation 10 vorhanden ist. Auch ist es möglich, dass in jeder Ladestation 10 eine Recheneinheit 20 vorhanden ist, und jede Ladestation 10 autark für sich eine Lastprognose erstellt und Soll-Ladeparameter bestimmt. Hierzu ist ein Austausch aller Informationen, insbesondere der Informationen zu den Ist-Ladeparametern zwischen allen Ladestationen 10 innerhalb der Gruppe 12 notwendig. Die Recheneinheit 20 kann zum Anderen in der Niederspannungstransformationsstation 6 angeordnet sein.

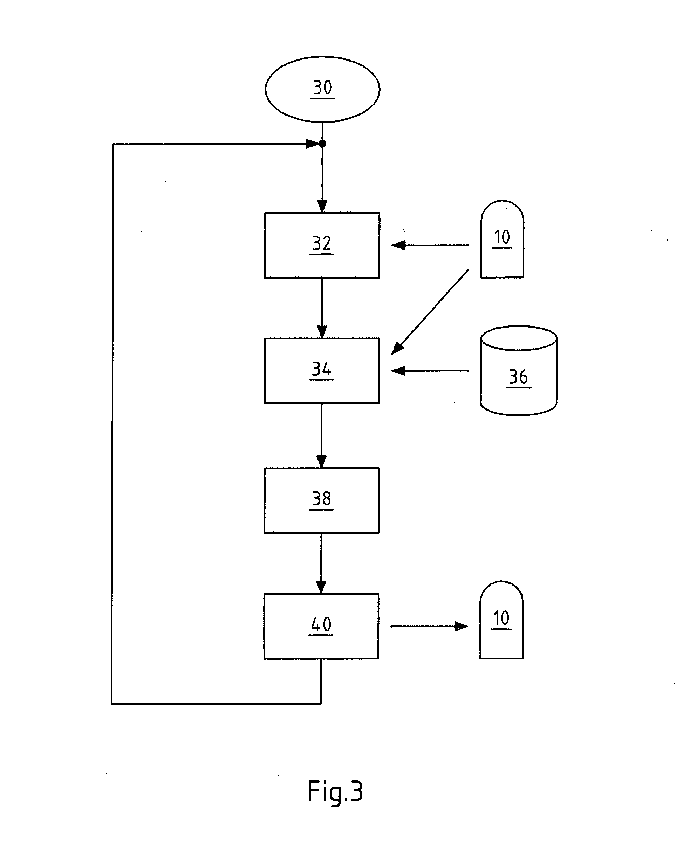

In der Fig. 3 ist der Ablauf des gegenständlichen Verfahrens gemäß einem Ausführungsbeispiel beschrieben.

In einem ersten Schritt werden die Ladestationen 10 einer Gruppe 12 gruppiert 30. Hierzu kommunizieren die Gruppierungseinheiten 18 Gruppen-IDs zwischen den Ladestationen 10 derart, dass sich eine Gruppe 12 bildet.

Nachdem eine Gruppe gruppiert (30) wurde, wird innerhalb der Gruppe ein Austausch 32 von Ist-Ladeparametern initiiert. Hierzu übermittelt jede Ladestation 10 der Gruppe 12 mittels der Kommunikationseinheit 16 den von der Ladesteuerschaltung 22 ermittelten Ist-Ladeparameter, der insbesondere die aktuelle Ladestromstärke beinhaltet. Die Ist-Ladeparameter aller Ladestationen 10 einer Gruppe 12 werden in zumindest einer Recheneinheit 20 empfangen. In der Recheneinheit 20 wird zumindest mit Hilfe der Ist-Ladeparameter eine Lastprognose erstellt 34.

Zum Erstellen 34 der Lastprognose kann zusätzlich eine Tagesganglinie oder eine Wochenganglinie, eine Monatsganglinie als auch eine Jahresganglinie aus einer Datenbank 36 gezogen werden. Darüber hinaus kann für das Erstellen 34 der Lastprognose von den Ladestationen 10 eine Ladeprognose empfangen werden. Die Ladeprognose kann beispielsweise mittels der Ladesteuerschaltung 22 oder mittels eines Ladereglers in dem Elektrofahrzeug erstellt werden.

Nachdem die Lastprognose erstellt 34 wurde, werden Soll-Ladeparameter bestimmt 38. Das Bestimmen 38 der Soll-Ladeparameter kann beispielsweise das Bestimmen 38 von maximalen Ladestromstärken, Ladedauern, Ladezeiträumen, Stromganglinie und/oder dergleichen beinhalten. Die bestimmten Soll-Ladeparameter werden an die Ladestationen 10 der Gruppe 12 kommuniziert 40. Die Ladestationen 10 empfangen die Soll-Ladeparameter mittels ihrer Kommunikationseinheiten 16 und setzen diese mittels der Ladesteuerschaltung 22 um, in dem entsprechende Ladeparameter zum Laden von Elektrofahrzeugen mit den Elektrofahrzeugen ausgehandelt werden.

In Abständen werden die Ist-Ladeparameter ausgetauscht 32 und es werden neue Lastprognosen erstellt 34 und die Soll-Ladeparameter bestimmt 38, so dass stets auf aktuelle Leistungsanforderungen reagiert werden kann.

Mittels des gegenständlichen Verfahrens und der gegenständlichen Vorrichtung ist es möglich, die Anforderung an ein Energieversorgungsnetz für das Laden von Elektrofahrzeugen zu reduzieren, indem elektrische Leistung anhand von Lastprognosen zeitlich verteilt zur Verfügung gestellt wird.

## Patentansprüche

1. Verfahren zur Steuerung von Ladestationen für Elektrofahrzeuge mit den Schritten,
- Gruppieren (30) von zumindest zwei Ladestationen (10) zu einer Gruppe (12), wobei mehrere Ladestationen (10) der Gruppe mit einer gemeinsamen Transformatorstation verbunden werden,
- Austauschen (32) zumindest von Ist-Ladeparametern der Ladestationen (10) innerhalb der Gruppe (12), wobei Ist-Ladeparameter Informationen zu der aktuell zur Verfügung gestellten elektrischen Leistung an der Ladestation enthalten,
- Austauschen von einer durch in einem mit einer Ladestation verbundenen Elektrofahrzeug angeordneten Laderegler erstellten, eine Stromganglinie für das Laden des Elektrofahrzeugs über eine verbleibende Ladedauer umfassenden Ladeprognose,
- Abschätzen eines zukünftigen Energiebedarfs der Transformatorstation mit einer Tagesganglinie zumindest einer Ladestation der Gruppe aus einer Datenbank,
- Erstellen (34) einer Lastprognose für die Gruppe (12) abhängig von zumindest den Ist-Ladeparametern, der Ladeprognose und der Tagesganglinie,
- adaptives Bestimmen (38) von Soll-Ladeparametern umfassend zumindest eine maximale Ladestromstärke und eine Ladezeit für die Ladestationen (10) der Gruppe (12) abhängig von der Lastprognose derart, dass einerseits eine maximale Transformatorleistung durch die über die Ladestationen der Gruppe zur Verfügung gestellte Leistung nicht überschritten wird und andererseits die an die Ladestationen der Gruppe angeschlossenen Elektrofahrzeuge über ihre jeweilig verbleibende Ladedauer mit der zum Laden der Batterie benötigten Energie versorgt werden,
- Aushandeln von Ladeparametern mit dem Elektrofahrzeug abhängig von den Soll-Ladeparametern wobei bei sich verändernden Soll-Ladeparametern die Ladeparameter während einer Ladephase mit dem Elektrofahrzeug neu ausgehandelt werden.

2. Verfahren nach einem der vorangehenden Ansprüche, **dadurch gekennzeichnet, dass** die Ist-Ladeparameter von der Ladestation (10) zumindest Informationen zu der aktuellen Ladestromstärke und/oder einem Laderegler des an die Ladestation angeschlossenen Elektrofahrzeugs enthalten.

3. Verfahren nach einem der vorangehenden Ansprüche, **dadurch gekennzeichnet, dass** die Ist-Ladeparameter in Abständen ausgetauscht (32) werden und dass die Lastprognose und/oder die Soll-Ladeparameter adaptiv abhängig von den aktuellen Ist-Ladeparametern verändert werden.

4. Verfahren nach einem der vorangehenden Ansprüche, **dadurch gekennzeichnet, dass** die Soll-Ladeparameter zumindest Informationen zu einer Ladedauer, einer Stromganglinie und/oder einer Energiemenge enthalten.

5. Verfahren nach einem der vorangehenden Ansprüche, **dadurch gekennzeichnet, dass** zu Beginn eines Ladevorgangs von einem Elektrofahrzeug an eine Ladestation (10) Informationen zu einer benötigten Energiemenge, einer bevorzugten Ladedauer, einer bevorzugten Ladezeit und/oder einem Laderegler übermittelt werden und dass von der Ladestation (10) abhängig von den Soll-Ladeparametern und den Informationen von dem Elektrofahrzeug zumindest eine maximale Ladestromstärke, ein Ladezeitraum, eine Ladedauer und/oder eine maximale Ladedauer bestimmt und an das Elektrofahrzeug kommuniziert wird.

6. Verfahren nach einem der vorangehenden Ansprüche, **dadurch gekennzeichnet, dass** die Soll-Ladeparameter abhängig von der verfügbaren elektrischen Leistung der Niederspannungsebene und/oder der Mittelspannungsebene bestimmt werden.

7. Verfahren nach einem der vorangehenden Ansprüche, **dadurch gekennzeichnet, dass** die Gruppe (12) zumindest eine Gruppen-ID aufweist.

8. Verfahren nach einem der vorangehenden Ansprüche, **dadurch gekennzeichnet, dass** die Gruppen-ID von einer Niederspannungstrafostation (6) an daran angeschlossene Ladestationen (10) übermittelt wird und/oder dass eine Gruppen-ID zwischen an eine selbe Niederspannungstrafostation (6) angeschlossenen Ladestationen (10) ausgetauscht wird.

9. Verfahren nach einem der vorangehenden Ansprüche, **dadurch gekennzeichnet, dass** innerhalb der Gruppe (12) in der Niederspannungstrafostation (6) oder in einer Ladestation (10) die Lastprognose und die Soll-Ladeparameter bestimmt werden.

10. Verfahren nach einem der vorangehenden Ansprüche, **dadurch gekennzeichnet, dass** das Austauschen der Ist-Ladeparameter zumindest das Senden (32) der Ist-Ladeparameter an den Transformator der Niederspannungsebene oder an eine Ladestation (10) der Gruppe (12) umfasst.

11. Ladestationen für Elektrofahrzeuge umfassend:
- Zuordnungsmittel (18) zum Gruppieren der Ladestation (10) zu einer Gruppe (12) mit zumindest zwei Ladestationen (10), wobei mehrere Ladestationen (10) der Gruppe mit einer gemeinsamen Transformatorstation verbunden sind,
- Kommunikationsmittel (16) zum Austauschen zumindest von Ist-Ladeparametern innerhalb der Gruppe (12), wobei Ist-Ladeparameter Informationen zu der aktuell zur Verfügung gestellten elektrischen Leistung an der Ladestation enthalten, und zum Austauschen von einer durch in einem mit einer Ladestation verbundenen Elektrofahrzeug angeordneten Laderegler erstellten, eine Stromganglinie für das Laden des Elektrofahrzeugs über eine verbleibende Ladedauer umfassenden Ladeprognose, wobei bei sich verändernden Soll-Ladeparametern die Ladeparameter während einer Ladephase mit dem Elektrofahrzeug neu aushandelbar sind, und
- zum Empfangen von Soll-Ladeparametern zum Bestimmen von Ladeparametern für das Laden von Elektrofahrzeugen, wobei die Soll-Ladeparameter eine Ladestromstärke und eine Ladezeit umfassen und abhängig sind von einer Lastprognose für die Gruppe (12) abhängig von zumindest den Ist-Ladeparametern, der Ladeprognose und einer einen zukünftigen Energiebedarf der Transformatorstation angebenden Tagesganglinie zumindest einer Ladestation der Gruppe adaptiv bestimmt sind, derart, dass einerseits eine maximale Transformatorleistung durch die über die Ladestationen der Gruppe zur Verfügung gestellte Leistung nicht überschritten wird und andererseits die an die Ladestationen der Gruppe angeschlossenen Elektrofahrzeuge über ihre jeweilig verbleibende Ladedauer mit der zum Laden der Batterie benötigten Energie versorgt werden.

12. Ladestationen für Elektrofahrzeuge umfassend:
- Zuordnungsmittel (18) zum Gruppieren der Ladestation (10) zu einer Gruppe (12) mit zumindest zwei Ladestationen (10), wobei mehrere Ladestationen (10) der Gruppe mit einer gemeinsamen Transformatorstation verbunden sind,
- Kommunikationsmittel (16) zum Empfangen zumindest von Ist-Ladeparametern von Ladestationen (10) der Gruppe (12), wobei Ist-Ladeparameter Informationen zu der aktuell zur Verfügung gestellten elektrischen Leistung an der Ladestation enthalten, und zum Austauschen von einer durch in einem mit einer Ladestation verbundenen Elektrofahrzeug angeordneten Laderegler erstellten, eine Stromganglinie für das Laden des Elektrofahrzeugs über eine verbleibende Ladedauer umfassenden Ladeprognose,
- Rechenmittel (20) zum Abschätzen eines zukünftigen Energiebedarfs der Transformatorstation mit einer Tagesganglinie zumindest einer Ladestation der Gruppe und zum Erstellen einer Lastprognose für die Gruppe (12) abhängig von zumindest den empfangenen Ist-Ladeparametern, der Ladeprognose und der Tagesganglinie, und zum adaptiven Bestimmen von Soll-Ladeparametern umfassend zumindest eine maximale Ladestromstärke und eine Ladezeit für die Ladestationen (10) der Gruppe (12) abhängig von der Lastprognose, derart, dass einerseits eine maximale Transformatorleistung durch die über die Ladestationen der Gruppe zur Verfügung gestellte Leistung nicht überschritten wird und andererseits die an die Ladestationen der Gruppe angeschlossenen Elektrofahrzeuge über ihre jeweilig verbleibende Ladedauer mit der zum Laden der Batterie benötigten Energie versorgt werden,
- wobei die Kommunikationsmittel (16) zum Aussenden der Soll-Ladeparameter an Ladestationen (10) der Gruppe (12) gebildet sind.

13. Niederspannungstransformatorstation umfassend:
- Zuordnungsmittel zum Gruppieren von Ladestationen (10) zu einer Gruppe (12) mit zumindest zwei Ladestationen (10), wobei mehrere Ladestationen (10) der Gruppe mit einer gemeinsamen Transformatorstation verbunden sind,
- Kommunikationsmittel zum Empfangen zumindest von Ist-Ladeparametern von Ladestationen der Gruppe (12), wobei Ist-Ladeparameter Informationen zu der aktuell zur Verfügung gestellten elektrischen Leistung an der Ladestation enthalten, und zum Austauschen von einer durch in einem mit einer Ladestation verbundenen Elektrofahrzeug angeordneten Laderegler erstellten, eine Stromganglinie für das Laden des Elektrofahrzeugs über eine verbleibende Ladedauer umfassenden Ladeprognose,
- Rechenmittel (20) zum Abschätzen eines zukünftigen Energiebedarfs der Transformatorstation mit einer Tagesganglinie zumindest einer Ladestation der Gruppe und zum Erstellen einer Lastprognose für die Gruppe (12) abhängig von zumindest den empfangenen Ist-Ladeparametern, der Ladeprognose und der Tagesganglinie, und zum adaptiven Bestimmen von Soll-Ladeparametern umfassend zumindest eine maximale Ladestromstärke und eine Ladezeit für die Ladestationen (10) der Gruppe (12) abhängig von der Lastprognose, derart, dass einerseits eine maximale Transformatorleistung durch die über die Ladestationen der Gruppe zur Verfügung gestellte Leistung nicht überschritten wird und andererseits die an die Ladestationen der Gruppe angeschlossenen Elektrofahrzeuge über ihre jeweilig verbleibende Ladedauer mit der zum Laden der Batterie benötigten Energie versorgt werden.

14. System umfassend zumindest eine Ladestation nach Anspruch 11 und eine Ladestation nach Anspruch 12 oder eine Niederspannungstransformatorstation nach Anspruch 13.

## Claims

1. Method for controlling charging stations for electrical vehicles, having the steps of
- grouping (30) at least two charging stations (10) into a group (12), wherein several charging stations (10) of the group (12) are connected with a common transformer station,
- exchanging (32) at least actual charging parameters of the charging stations (10) within the group (12), wherein actual charging parameters comprise information regarding the currently provided electrical power at the charging station,
- exchanging a charging prediction being established by a charging controller being arranged in an electrical vehicle being connected to the charging station, comprising a current load curve for charging the electrical vehicle in the remaining duration of loading,
- estimating a future energy need of the transformer station using a daily load curve of at least one charging station of the group from a database,
- creating (34) a load prediction for the group (12) as a function of at least the actual charging parameters, the charging prediction and the daily load curve,
- adaptively determining (38) reference charging parameters, comprising at least a maximal charging amperage and a charging time for the charging stations (10) of the group (12) as a function of the load prediction, such that on the one hand the power provided by the charging stations of the group do not exceed a maximum transformer power and on the other hand the electrical vehicles connected to the charging stations of the group receive the power required for charging their batteries within their respective remaining charging durations,
- negotiating of charging parameters with the electrical vehicle depending on the reference charging parameters, wherein in the event of varying reference charging parameters, the charging parameters are renegotiated with the electrical vehicle during a charging phase.

2. Method according to any one of the preceding claims, **characterised in that** the actual charging parameters of the charging station (10) contain at least information about the present charging amperage and/or a charging regulator of the electrical vehicle connected to the charging station.

3. Method according to any one of the preceding claims, **characterised in that** the actual charging parameters are exchanged at intervals (32), and **in that** the load predictions and/or the must charging parameters are modified adaptively as a function of the present actual charging parameters.

4. Method according to any one of the preceding claims, **characterised in that** the reference charging parameters contain at least information about a charging duration, a current load curve and/or a quantity of energy.

5. Method according to any one of the preceding claims, **characterised in that** at the start of a charging process, information about a required quantity of energy, a preferred charging duration, a preferred charging time and/or a charging regulator is sent from an electrical vehicle to a charging station (10), and **in that** at least a maximum charging amperage, a charging period, a charging duration and/or a maximum charging duration are determined and communicated to the electrical vehicle by the charging station (10) depending of the reference charging parameters and the information from the electrical vehicle.

6. Method according to any one of the preceding claims, **characterised in that** the reference charging parameters are determined as a function of the available electrical power of the low-voltage level and/or the medium-voltage level.

7. Method according to any one of the preceding claims, **characterised in that** the group (12) has at least one group ID.

8. Method according to any one of the preceding claims, **characterised in that** the group ID is sent from a low-voltage transformer station (6) to charging stations (10) connected thereto, and/or **in that** a group ID is exchanged between charging stations (10) connected to the same low-voltage transformer station (6).

9. Method according to any one of the preceding claims, **characterised in that** the load prediction and the reference charging parameters within the group (12) are determined in the low-voltage transformer station (6) or in a charging station (10).

10. Method according to any one of the preceding claims, **characterised in that** the exchange of the actual charging parameters comprises at least transmission (32) of the actual charging parameters to the transformer of the low-voltage system or to a charging station (10) of the group (12).

11. Charging stations for electrical vehicles comprising:
- allocation means (18) for grouping the charging station (10) into a group (12) of at least two charging stations (10), wherein several charging stations (10) of the group (12) are connected with a common transformer station,
- communication means (16) for exchanging at least actual charging parameters within the group (12), wherein actual charging parameters comprise information regarding the currently provided electrical power at the charging station, and for exchanging a charging prediction being established by a charging controller being arranged in an electrical vehicle being connected to the charging station, comprising a current load curve for charging the electrical vehicle in the remaining duration of loading, wherein in the event of varying reference charging parameters, the charging parameters can be renegotiated with the electrical vehicle during a charging phase,
- for receiving reference charging parameters in order to determine charging parameters for the charging of electrical vehicles, wherein the reference charging parameters comprise a charging amperage und a charging time and are adaptively determined depending on a load prediction for the group depending on at least the current charging parameters, the charging prediction and daily load curve defining a future energy need of the transformer station of at least one charging station, such that on the one hand the power provided by the charging stations of the group do not exceed a maximum transformer power and on the other hand the electrical vehicles connected to the charging stations of the group receive the power required for charging their batteries within their respective remaining charging durations.

12. Charging stations for electrical vehicles comprising:
- allocation means (18) for grouping the charging station (10) into a group (12) of at least two charging stations (10), wherein several charging stations (10) of the group (12) are connected with a common transformer station,
- communication means (16) for receiving at least actual charging parameters from charging stations (10) of the group (12), wherein actual charging parameters comprise information regarding the currently provided electrical power at the charging station, and for exchanging a charging prediction being established by a charging controller being arranged in an electrical vehicle being connected to the charging station, comprising a current load curve for charging the electrical vehicle in the remaining duration of loading,
- computation means (20) for estimating a future energy need of the transformer station using a daily load curve of at least one charging station of the group and for compiling a load prediction for the group (12) depending on at least the received actual charging parameters, the charging prediction and the daily load curve and for adaptively determining reference charging parameters comprising a maximal charging amperage and a loading duration for the charging stations (10) of the group (12) depending on the load prediction, such that on the one hand the power provided by the charging stations of the group do not exceed a maximum transformer power and on the other hand the electrical vehicles connected to the charging stations of the group receive the power required for charging their batteries within their respective remaining charging durations, wherein
- the communication means (16) is configured to transmit the must charging parameters to charging stations (10) of the group (12).

13. Low-voltage transformer station comprising:
- allocation means for grouping charging stations (10) into a group (12) of at least two charging stations (10), wherein several charging stations (10) of the group (12) are connected with a common transformer station,
- communication means for receiving at least actual charging parameters from charging stations of the group (12), wherein actual charging parameters comprise information regarding the currently provided electrical power at the charging station, and for exchanging a charging prediction being established by a charging controller being arranged in an electrical vehicle being connected to the charging station, comprising a current load curve for charging the electrical vehicle in the remaining duration of loading,- computation means (20) for estimating a future energy need of the transformer station using a daily load curve of at least one charging station of the group and for compiling a load prediction for the group (12) depending on at least the received actual charging parameters, the charging prediction and the daily load curve and for adaptively determining reference charging parameters comprising a maximal charging amperage and a loading duration for the charging stations (10) of the group (12) depending on the load prediction, such that on the one hand the power provided by the charging stations of the group do not exceed a maximum transformer power and on the other hand the electrical vehicles connected to the charging stations of the group receive the power required for charging their batteries within their respective remaining charging durations.

14. System comprising at least one charging station according to Claim 11 and one charging station according to Claim 12 or a low-voltage transformer station according to Claim 13.

## Revendications

1. Procédé de commande de stations de charge pour véhicules électriques, qui comprend les étapes suivantes :
- groupement (30) d'au moins deux stations de charge (10) pour la formation d'un groupe (12), sachant que plusieurs stations de charge (10) sont reliées à une station de transformation commune,
- échange (32), au moins, de paramètres réels entre les stations de charge (10) formant le groupe (12), sachant que les paramètres réels contiennent des informations concernant la puissance électrique actuellement disponible dans la station de charge,
- échange d'un pronostic de charge établi par un régleur de charge, qui est installé dans un véhicule électrique relié à une station de charge, lequel pronostic comprend un profil de courant pour la charge d'un véhicule électrique pendant le reste d'une durée de charge,
- estimation d'un besoin d'énergie futur de la station de transformation avec un profil journalier d'au moins une station de charge du groupe, à partir d'une banque de données,
- établissement (34) d'un pronostic de charge pour le groupe (12), au moins en fonction des paramètres réels, du pronostic de charge et du profil journalier,
- détermination adaptive (38) de paramètres de charge de consigne comprenant au moins une puissance de courant de charge maximale et un temps de charge, pour les stations de charge (10) du groupe (12), en fonction du pronostic de charge, de telle manière que, d'une part, une puissance de transformation maximale ne soit pas dépassée par la puissance mise à disposition par les stations de charge du groupe, et que, d'autre part (12), les véhicules électriques, raccordés aux stations de charge du groupe, reçoivent l'énergie nécessaire à la charge de la batterie pendant le reste de la durée de charge respective,
- négociation de paramètres de charge de consigne, sachant que, lors de paramètres de charge de consigne soumis à des changements, les paramètres de charge sont négociés de nouveau au cours d'une phase de charge du véhicule électrique.

2. Procédé selon la revendication précédente,
**caractérisé en ce que** les paramètres réels de la station de charge (10) contiennent au moins des informations concernant la puissance de courant de charge actuelle et / ou un régleur de charge du véhicule électrique raccordé à la station.

3. Procédé selon l'une des revendications précédentes,
**caractérisé en ce que** les paramètres réels sont communiqués (32) à intervalles et que le pronostic de charge et / ou les paramètres de charge de consigne peuvent être modifiés, de manière adaptive, en fonction des paramètres réels, actuels.

4. Procédé selon l'une des revendications précédentes,
**caractérisé en ce que** les paramètres de charge de consigne contiennent au moins des informations concernant une durée de charge, un profil de courant et / ou une quantité d'énergie.

5. Procédé selon l'une des revendications précédentes,
**caractérisé en ce que**, au début d'un processus de charge d'un véhicule électrique dans une station de charge (10), des informations concernant une quantité d'énergie nécessitée, une durée de temps préférée, un temps de charge préféré et / ou un régleur de charge sont détectées et q u e la station de charge (10), en fonction des paramètres de charge de consigne et des informations du véhicule électrique, détermine et communique au véhicule électrique au moins une puissance de courant de charge maximale, un temps de charge, une durée de charge et / ou une durée de charge maximale.

6. Procédé selon l'une des revendications précédentes,
**caractérisé en ce que** les paramètres de charge de consigne sont déterminés en fonction de la puissance électrique disponible du niveau basse tension et / ou du niveau moyenne tension.

7. Procédé selon l'une des revendications précédentes,
**caractérisé en ce que** le groupe (12) comprend au moins un ID de groupe.

8. Procédé selon l'une des revendications précédentes
**caractérisé en ce que** l'ID de groupe est détecté par la station de transformation basse tension (6), dans des stations de charge (10) qui y sont rattachées, et / ou qu'un ID de groupe est échangé entre des stations de charge (10) raccordées à une même station de transformation basse tension (6).

9. Procédé selon l'une des revendications précédentes,
**caractérisé en ce que** le pronostic de charge et les paramètres de charge de consigne sont déterminés, à l'intérieur du groupe (12), dans la station de transformation basse tension (6) ou dans une station de charge (10).

10. Procédé selon l'une des revendications précédentes,
**caractérisé en ce que** l'échange des paramètres réels comprend au moins l'envoi (32) des paramètres réels au transformateur basse tension ou à une station de charge (10) du groupe (12).

11. Stations de charge pour véhicules électriques, comprenant:
- des moyens d'attribution (18) pour le groupement de la station de charge (10) dans un groupe (12) d'au moins deux stations de charge (10), sachant que plusieurs stations de charge (10) du groupe sont reliées à une station de transformation commune,
- des moyens de communication (16) pour échanger au moins des paramètres réels à l'intérieur du groupe (12), sachant que les paramètres réels contiennent des informations concernant la puissance électrique actuellement disponible dans la station de charge, et pour la communication d'un pronostic de charge, qui, établi par un régleur de charge, installé dans un véhicule électrique relié à une station de charge, comprend un profil de courant pour la charge d'un véhicule électrique pendant le reste d'une durée de charge, sachant que, lors de paramètres de charge de consigne soumis à des changements, les paramètres de charge peuvent être négociés de nouveau pendant une phase de charge du véhicule électrique, et
- des moyens de réception pour la réception de paramètres de charge de consigne permettant de déterminer des paramètres de charge pour la charge de véhicules électriques, sachant que les paramètres de charge de consigne comprennent une puissance de courant et un temps de charge et dépendent d'un pronostic de charge concernant le groupe (12), au moins en fonction des paramètres réels, du pronostic de charge et d'un profil journalier d'au moins une station de charge du groupe, indiquant le besoin d'énergie futur de la station de transformation, de telle manière que, d'une part, une puissance de transformation maximale ne soit pas dépassée par la puissance mise à disposition per les stations de charge du groupe, et que, d'autre part, les véhicules électriques, raccordés aux stations de charge du groupe, reçoivent l'énergie nécessaire à la charge de la batterie pendant le reste de leur durée de charge respective.

12. Stations de charge pour véhicules électriques, comprenant :
- des moyens d'attribution (18) pour le groupement de la station de charge (10) dans un groupe (12) d'au moins deux stations de charge (10), sachant que plusieurs stations de charge (10) du groupe sont reliées à une station de transformation commune,
- des moyens de communication (16) pour recevoir au moins des paramètres réels de stations de charge (10) du groupe (12), sachant que les paramètres réels contiennent des informations concernant la puissance électrique actuellement mise à disposition dans la station de charge, et pour la communication d'un pronostic de charge, qui, établi par un régleur de charge, installé dans un véhicule électrique relié à une station de charge, comprend un profil de courant pour la charge d'un véhicule électrique pendant le reste de la durée de charge,
- des moyens de calcul (20) pour l'évaluation d'un besoin d'énergie futur de la station de transformation basse tension, avec un profil journalier d'au moins une station de charge du groupe, et pour l'établissement d'un pronostic de charge, pour le groupe (12), au moins en fonction des paramètres réels reçus, du pronostic de charge et du profil journalier, et pour la détermination adaptive de paramètres de charge de consigne comprenant au moins une puissance de charge maximale et un temps de charge pour les stations de charge (10) du groupe (12), en fonction du pronostic de charge, de telle manière que, d'une part, une puissance de transformation maximale ne soit pas dépassée par la puissance mise à disposition par les stations de charge du groupe, et que, d'autre part (12), les véhicules électriques, raccordés aux stations de charge du groupe, reçoivent l'énergie nécessaire à la charge de la batterie pendant le reste de leur durée de charge,
- sachant que les moyens de communication (16) sont conçus pour envoyer les paramètres de charge de consigne aux stations de charge (10) du groupe (12).

13. Station de transformation basse tension, comprenant :
- des moyens d'attribution pour le groupement de stations de charge (10) dans un groupe (12) d'au moins deux stations de charge (10), sachant que plusieurs stations de charge (10) du groupe sont reliées à une station de transformation commune,
- des moyens de communication pour recevoir au moins des paramètres réels de stations de charges du groupe (12), sachant que les paramètres réels contiennent des informations concernant la puissance électrique actuellement mise à disposition dans la station de charge, et pour communiquer un pronostic de charge, qui, établi par un régleur de charge, installé dans un véhicule électrique relié à une station de charge, comprend un profil de courant pour la charge du véhicule électrique pendant le reste de la durée de charge,
- des moyens de calcul (20) pour l'évaluation d'un besoin d'énergie futur de la station de transformation, avec un profil journalier d'au moins une station de charge du groupe, et pour l'établissement d'un pronostic de charge, pour le groupe (12), au moins en fonction des paramètres réels reçus, du pronostic de charge et du profil journalier, et pour la détermination adaptive de paramètres de charge de consigne, comprenant au moins une puissance de courant de charge maximale et un temps de charge, pour les stations de charge (10) du groupe (12), en fonction du pronostic de charge, de telle manière que, d'une part, une puissance de transformation maximale ne soit pas dépassée par la puissance mise à disposition par les stations de charge du groupe, et que, d'autre part (12), les véhicules électriques, raccordés aux stations de charge du groupe, reçoivent l'énergie nécessaire à la charge de la batterie pendant le reste de leur durée de charge respective.

14. Système comprenant au moins une station de charge selon la revendication 11 et une station de charge selon la revendication 12 ou une station de transformation basse tension selon la revendication 13.
